# FASCICULE DE BREVET EUROPEEN

(11) **EP 1 388 294 B1**
(45) Date de publication et mention de la délivrance du brevet: **11.10.2006**
(21) Numéro de dépôt: 03291814.6
(22) Date de dépôt: 22.07.2003
(51) Int. Cl.: A23L 1/09, A23L 1/217, A23L 1/164

(54) **Procede de fabrication de snacks alleges en matieres grasses et enrichis en fibres et snacks ainsi obtenus**
Verfahren zur Herstellung von fettarmen, faserangereicherten Imbissprodukten, und so erhaltene Imbissprodukte
Process for preparing low-fat, fibre-enriched snacks as well as snacks obtained thereby

(30) Priorité: 05.08.2002 FR 0209962
(43) Date de publication de la demande: 11.02.2004
(73) Titulaire: Roquette Frères, 62136 Lestrem (FR)
(72) Inventeur: Delebarre, Marie, 62136 La Couture (FR)
(74) Mandataire: Nargolwalla, Cyra

(56) Documents cités:
- EP-A- 0 418 955
- EP-A- 1 006 128
- EP-A- 1 245 581

## Description

La présente invention a pour objet un procédé de fabrication de snacks allégés en matières grasses et enrichis en fibres mettant en oeuvre un saccharide particulier. Elle a également pour objet les snacks obtenus selon ce procédé, contenant un tel saccharide particulier.

On entend par snacks au sens de la présente invention les produits de type chips obtenus par laminage et découpage d'une pâte et les produits obtenus par extrusion d'une pâte de manière à obtenir des formes très diverses, cylindriques, en lamelles, en bâtonnets ou autres, qui sont cuits par friture.

On entend par « allégés en matières grasses » au sens de la présente invention des produits qui présentent lors de la friture une reprise en huile plus faible que les produits standard. En effet, les snacks frits présentent l'inconvénient, lors de la cuisson, d'absorber une quantité non négligeable d'huile de friture. Les produits obtenus sont alors riches en matières grasses, ce qui va à l'encontre des nouveaux souhaits des consommateurs pour des produits allégés. Plusieurs solutions ont été proposées pour limiter la reprise en huile de ces produits, comme notamment l'enrobage avant cuisson des snacks à l'aide de divers composés filmogènes tels que l'amidon. Une autre solution, décrite dans le brevet EP 0 418 955 A2, consiste à mettre en oeuvre une pâte comprenant des maltodextrines classiques ou des sirops de glucose déshydratés issus de l'hydrolyse d'amidon et présentant un DE compris entre 5 et 30, de préférence compris entre 10 et 20, soit une teneur en sucres réducteurs supérieure à 5% et de préférence supérieure à 10%. Les snacks ainsi préparés présentent une reprise en huile limitée par rapport aux produits de l'art antérieur, du fait que les maltodextrines utilisées permettent de préparer une pâte à teneur en eau plus basse. On sait en effet que plus la teneur en eau de la pâte est élevée, plus la reprise en huile lors de la friture est importante.

EP 1 245 581 A1, qui est un document pertinent au titre de l'Article 54(3) CBE, décrit un procédé de préparation d'un aliment à valeur calorique réduite, caractérisé par le fait qu'il comprend l'étape consistant à remplacer tout ou partie des matières caloriques de l'aliment par une quantité efficace quant à la réduction de la valeur calorique, de maltodextrines branchées.

Outre ce souhait de fabriquer des produits allégés en matières caloriques, les fabricants sont de plus en plus préoccupés par la nutrition et les bienfaits potentiels des aliments. En effet, la fréquence des cancers et maladies coronariennes, la méfiance des consommateurs suite aux récentes crises de l'industrie agroalimentaire, et la vulgarisation des connaissances nutritionnelles récentes accentuent cette attente de produits sains, qui permettent de vivre mieux et plus longtemps. Les fibres alimentaires sont ainsi passées au premier plan des ingrédients fonctionnels. En effet, elles jouent un rôle de protection contre le cancer, les maladies cardiovasculaires, le diabète ou encore l'obésité. Il paraît donc intéressant d'enrichir les aliments en fibres. Ces dernières doivent toutefois présenter une stabilité satisfaisante aux différents traitements subis par l'aliment, en particulier les étapes de cuisson à haute température, de manière à ce que l'apport de fibres ne soit pas altéré en aval des procédés de transformation.

Faisant le constat de cet état de la technique, la société demanderesse s'est donnée comme objectif la mise au point de snacks allégés en matières grasses et enrichis en fibres en mettant en oeuvre un ingrédient technologique qui satisfasse à toutes les exigences précitées, c'est à dire qui limite la reprise en huile des produits lors de la friture tout en constituant un apport de fibres susceptibles de supporter les fortes températures appliquées lors de ladite friture. Les maltodextrines standard dont il est question dans le brevet précité EP 0 418 955 A2 sont parfaitement digestibles par le système enzymatique humain et ne constituent donc pas un apport de fibres au sens de la présente invention. En effet, les amidons et maltodextrines contiennent uniquement des liaisons glucosidiques 1→4 (95%) et 1→6 (5%), hydrolysables par le système digestif humain.

C'est après de nombreux essais et études que la société demanderesse a eu le mérite de trouver que l'objectif défini ci-dessus pouvait être atteint à la condition d'utiliser une maltodextrine branchée présentant des paramètres analytiques bien particuliers.

La présente invention a donc pour objet un procédé de fabrication de snacks cuits par friture enrichis en fibres, caractérisé par le fait qu'il comprend l'étape consistant à incorporer à la pâte servant à la fabrication desdits snacks de 1 à 30%, de préférence de 2 à 20% et plus préférentiellement encore de 2,5 à 15% en poids par rapport au produit fini de maltodextrines branchées présentant entre 15 et 35% de liaisons glucosidiques 1→6, une teneur en sucres réducteurs inférieure à 10%, un poids moléculaire Mw compris entre 4000 et 6000 g/mole et une masse moléculaire moyenne en nombre Mn comprise entre 2000 et 4000 g/mole.

Par maltodextrines branchées on entend au sens de la présente invention des maltodextrines telles que décrites dans la demande de brevet EP 1.006.128 dont la Demanderesse est titulaire. Ces maltodextrines branchées présentent un caractère d'indigestibilité qui a pour conséquence de diminuer leur pouvoir calorique, en empêchant leur assimilation au niveau de l'intestin grêle. Elles représentent donc une source de fibres indigestibles, bénéfiques pour le métabolisme et pour l'équilibre intestinal. A titre indicatif, leur taux de fibres insolubles déterminé par la méthode AOAC (Prosky method, 985-29 (1986)) est généralement supérieur à 50% sur matière sèche. Leur faible teneur en molécules de faible degré de polymérisation (« DP ») contribue également à leur faible caloricité. Leur teneur élevée en liaisons glucosidiques 1→6 a pour conséquence d'abaisser leur pouvoir cariogène en réduisant leur assimilation par les micro-organismes de la cavité buccale. Ce taux élevé en liaisons 1→6 leur confère également des propriétés prébiotiques tout à fait particulières : il est en effet apparu que les bactéries du caecum et du colon de l'homme et des animaux, telles que les bactéries butyrogènes, lactiques ou propioniques métabolisent des composés hautement branchés. D'autre part, ces maltodextrines branchées favorisent le développement des bactéries bifidogènes au détriment des bactéries indésirables. Il en résulte des propriétés tout à fait bénéfiques pour la santé du consommateur.

Des produits présentant des fonctionnalités proches, comme notamment les fibres solubles commercialisées par MATSUTANI sous la dénomination FIBERSOL® et décrites dans le brevet EP 0 358 461, qui présentent également des effets bénéfiques pour la santé en termes de propriétés bifidogènes et d'apport de fibres, ont été proposés dans les aliments enrichis en fibres. Ces produits présentent cependant le désavantage d'être instables à des températures élevées, comme il va être exemplifié par ailleurs. Cette instabilité se traduit par une hydrolyse importante et progressive au cours de la cuisson, qui génère une libération indésirable de glucose et de fructose. Cette instabilité est dissuasive pour une utilisation dans les snacks qui sont soumis à des températures de friture élevées. Il en va de même pour les produits dérivés de l'inuline comme en particulier les fructo-oligo-saccharides largement utilisés comme source de fibres, qui sont eux aussi sujets à une hydrolyse à haute température.

La Demanderesse a alors trouvé qu'en mettant en oeuvre lesdites maltodextrines branchées particulières dans un procédé de fabrication de snacks allégés en matières grasses, l'on pouvait avantageusement obtenir des snacks enrichis en fibres et allégés en matières grasses par un procédé simple à mettre en oeuvre. En effet, l'incorporation desdites maltodextrines branchées limite considérablement la reprise en matières grasses des snacks lors de la friture, et ce même pour des teneurs en eau importantes dans la pâte. D'autre part, lesdites maltodextrines branchées sont relativement stables à la cuisson comme il le sera exemplifié par ailleurs.

Selon une variante préférée, lesdites maltodextrines branchées présentent une teneur en sucres réducteurs comprise entre 2 et 5% et un Mn compris entre 2000 et 3000 g/mole.

Les teneurs en sucres réducteurs dont il est question dans la présente invention sont exprimées en glucose, en poids par rapport au poids sec de produit, et mesurées par la méthode de BERTRAND.

Selon une autre variante avantageuse, tout ou partie des maltodextrines branchées sont hydrogénées.

L'invention a également pour objet des snacks allégés en matières grasses et enrichis en fibres, caractérisés en ce qu'ils comprennent de 1 à 30%, de préférence de 2 à 20% et plus préférentiellement encore de 2,5 à 15% en poids sec par rapport au produit fini de maltodextrines branchées présentant entre 15 et 35% de liaisons glucosidiques 1→6, une teneur en sucres réducteurs inférieure à 10%, un poids moléculaire Mw compris entre 4000 et 6000 g/mole et une masse moléculaire moyenne en nombre Mn comprise entre 2000 et 4000 g/mole.

Avantageusement, lesdites maltodextrines branchées présentent une teneur en sucres réducteurs comprise entre 2 et 5% et un Mn compris entre 2000 et 3000 g/mole.

Selon une autre variante avantageuse, tout ou partie desdites maltodextrines branchées est hydrogénée.

Pour préparer les snacks selon la présente invention, on procède comme suit, ou de manière équivalente.

On prépare une pâte comprenant une source d'amidon, des maltodextrines branchées selon l'invention, éventuellement un émulsifiant et de l'eau.

La source d'amidon est apportée par une farine. On préfère utiliser une farine de pomme de terre, celle-ci pouvant se présenter par exemple sous forme de flocons ou de granulés de pomme de terre. D'autres sources d'amidon peuvent toutefois être utilisées, seules ou en divers mélanges comme notamment des farines de blé, de riz, de soja, d'avoine, de pois ou encore de tapioca.

La source d'amidon peut être également complétée par un apport d'amidons de toutes origines, natifs ou modifiés. Généralement, la source d'amidon représente 50 à 90% en poids de la pâte.

Les maltodextrines branchées représentent 1 à 30%, de préférence 2 à 20% et plus préférentiellement encore 2,5 à 15% en poids sec de la pâte.

On peut ajouter jusqu'à environ 5% d'émulsifiants, ainsi que divers ingrédients alimentaires convenant pour la préparation de snacks, comme par exemple sel, sucre, arômes et colorants.

A titre indicatif, de très bons résultats ont été obtenus en formulant des snacks comprenant sur matière sèche :
- 6 à 14% de maltodextrines branchées présentant une teneur en sucres réducteurs comprise entre 2 et 5%, un poids moléculaire Mw compris entre 4000 et 6000 g/mole et une masse moléculaire moyenne Mn comprise entre 2000 et 3000 g/mole ;
- au moins 80% d'une source d'amidon
- au moins 0,5% d'émulsifiant

La teneur en eau de la pâte est ajustée pour obtenir une hydratation de la pâte comprise entre 20 et 45%, cette hydratation devant permettre une machinabilité suffisante pour laminer et découper la pâte avant cuisson. La pâte peut être obtenue selon diverses techniques connues de l'homme du métier, comme notamment par malaxage des ingrédients dans un mixer, ou encore dans une installation d'extrusion.

Elle est ensuite étalée par laminage en une couche de faible épaisseur, qui est ensuite découpée selon les formes d'articles désirées. La pâte peut également être mise en forme à l'aide de l'installation d'extrusion.

Les articles mis en forme sont ensuite cuits par friture, selon les procédés classiques. A titre d'exemple, on procède à cuisson dans un bain d'huile à 195°C pendant 15 secondes. On obtient alors des snacks ayant une consistance légère et croustillante.

On peut également envisager d'incorporer les maltodextrines branchées selon l'invention en mélange avec d'autre types de maltodextrines, comme par exemple des maltodextrines standard. A titre indicatif, de bons résultats ont été obtenus en mélangeant environ 1 à 2,5% de maltodextrines standard présentant un taux de sucres réducteurs supérieur à 5% avec au moins 1% de maltodextrines branchées selon l'invention, ces pourcentages étant exprimés en poids sec par rapport au produit fini. Selon une variante préférée, lesdites maltodextrines branchées présentent un taux de sucres réducteurs inférieur à 5%, et sont incorporées à hauteur de 1 à 30% en poids sec.

Certaines sous-familles de maltodextrines branchées décrites dans la demande de brevet EP 1.006.128 peuvent aussi être mélangées aux maltodextrines branchées conformes à l'invention, sans toutefois excéder 2,5% en poids par rapport au produit fini. Il s'agit en particulier de maltodextrines branchées de bas poids moléculaire présentant une teneur en sucres réducteurs comprise entre 5 et 20% et une masse moléculaire Mn inférieure à 2000 g/mole.

L'invention sera mieux comprise à la lecture des exemples qui suivent, qui se veulent illustratifs et non limitatifs.

### Exemple 1 : Préparation de snacks laminés empilables selon l'invention et comparaison aux produits de l'art antérieur.

On prépare selon la formule suivante des snacks laminés empilables allégés en matières grasses selon l'art antérieur :

| | |
|---|---|
| Flocons de pomme de terre : | 43.3% |
| Granulés de pomme de terre : | 19.7% |
| Amidon de mais : | 16.7% |
| Amidon de blé : | 9.0% |
| Dimodan PVP (émulsifiant) : | 3.0% |
| Maltodextrine* : | 6.7% |
| Dextrose : | 1.6% |

| | |
|---|---|
| * GLUCIDEX®6 ou GLUCIDEX®19 commercialisés par la Demanderesse. | |

On prépare selon la même formule des snacks laminés empilables allégés en matières grasses et enrichis en fibres, les 6.7% de maltodextrines standard étant remplacés par 6.7% de maltodextrines branchées selon l'invention.

Les maltodextrines branchées selon l'invention présentent la composition suivante :

| | |
|---|---|
| Sucres réducteurs | 2,3 |
| Mn (g/mole) | 2480 |
| Mw (g/mole) | 5160 |
| Liaison 1,2 (%) | 10 |
| Liaison 1,3 (%) | 12 |
| Liaison 1,4 (%) | 49 |
| Liaison 1,6 (%) | 29 |

Les maltodextrines standard GLUCIDEX®6 et GLUCIDEX®19 présentent quant à elles un taux de sucres réducteurs respectivement de 6 et 12%, un taux de liaisons glucosidiques 1→6 inférieur à 15% et un poids moléculaire Mw supérieur à 6000 g/mole.

On mélange les différents ingrédients et on incorpore de l'eau afin d'obtenir une hydratation de la pâte de 40%. Le mélange obtenu est passé sur extrudeuse à froid afin d'obtenir une pâte, qui est ensuite laminée et découpée en chips.

Les chips sont ensuite frites dans de l'huile à 195°C pendant 15 secondes.

Les produits obtenus présentent une teneur en eau de 3 à 4% environ. Ils sont analysés de manière à déterminer la teneur en matière grasse et la dureté INSTRON (N).

Les résultats sont donnés dans le tableau ci-après :

| | TENEUR EN EAU | | TENEUR EN MATIERES GRASSES sur matière sèche | DURETE INSTRON (N) |
|---|---|---|---|---|
| | Avant cuisson | Après cuisson | après cuisson | après cuisson |
| GLUCIDEX®6 | 42,6% | 3,7% | 37,7% | 4,6+/-1 |
| GLUCIDEX®19 | 45,3% | 3,7% | 39,7% | 3,5+/-0,8 |
| **Maltodextrines branchées selon l'invention** | **41,7%** | **3,5%** | **32,8%** | **3,4+/-0,8** |

La substitution des maltodextrines standard par les maltodextrines branchées selon l'invention permet une diminution de la prise d'huile lors de la friture. Les snacks obtenus selon l'invention ne montrent pas de différence perceptible en terme de texture par rapport à l'art antérieur, ils sont de plus avantageusement enrichis en fibres.

### Exemple 2 : influence de la teneur en maltodextrines branchées et comparaison avec l'art antérieur.

On prépare selon le même procédé que l'exemple précédent des snacks allégés en matières grasses et enrichis en fibres, avec des taux d'incorporation de maltodextrines branchées variant de 0 à 13,3%.

On réalise des formules comparatives en remplaçant les maltodextrines branchées selon l'invention par des fibres solubles de l'art antérieur.

Ces fibres solubles présentent une teneur en sucres réducteurs supérieure à 10%, un poids moléculaire Mw inférieur à 4000 g/mole et une masse moléculaire moyenne en nombre inférieure à 2000 g/mole. Ce produit présente d'autre part un taux de fibres insolubles inférieur à 50% (déterminé par la méthode AOAC 985-29).

On met en oeuvre les formules suivantes (quantités en % en poids sec) :

| | A | B | C | D |
|---|---|---|---|---|
| Flocons de pomme de terre | 46,7 | 43,3 | 41,7 | 40,2 |
| Granulés de pomme de terre | 21,2 | 19,7 | 19 | 10,9 |
| Amidon de maïs | 17,8 | 16,7 | 16 | 9,2 |
| Amidon de blé | 9,7 | 9 | 8,7 | 5 |
| Dimodan PVP | 3 | 3 | 3 | 1,8 |
| **Maltodextrines branchées selon l'invention ou fibres solubles de l'art antérieur** | **0** | **6,7** | **10** | **13,3** |
| Dextrose | 1,6 | 1,6 | 1,6 | 1,6 |

Les snacks sont préparés dans les mêmes conditions que l'exemple 1. Après friture, on mesure les teneurs en matières grasses, la dureté INSTRON, la teneur en eau, ainsi que la teneur résiduelle en maltodextrines branchées selon l'invention ou en fibres solubles de l'art antérieur, reflétant l'hydrolyse éventuelle au cours de la friture.

Les résultats sont repris dans le tableau ci-après :

| | Teneur en maltodextrines branchées ou en fibres solubles sur matière sèche, | | Perte à la friture | Teneur en eau | | Teneur en matière grasse sur matière sèche, | Dureté INSTRON (N) |
|---|---|---|---|---|---|---|---|
| | Avant cuisson | Après cuisson | | Avant cuisson | Après cuisson | Après cuisson | Après cuisson |
| Formule A Fibres solubles | 0 % | 0 % | - | 43 % | 5.1 % | 36.9 % | 4.5 ⁺/₋ 0.5 |
| Formule A maltodextrines branchées | 0 % | 0 % | - | 41.7 % | 4.2 % | 35.2 % | 3.0 ⁺/₋ 0.5 |
| Formule B fibres solubles | 6.97 % | 4.77 % | -31.6 % | 42.6 % | 3.5 % | 35.9 % | 3.6 ⁺/₋ 0.6 |
| Formule B maltodextrines branchées | 6.5 % | 5.2 % | - 20 % | 41.7 % | 3.5 % | 32.8 % | 3.4 ⁺/₋ 0.8 |
| Formule C fibres solubles | 10.64 % | 7.45 % | - 30 % | 43.6 % | 3.3 % | 35.0% | 3.6 ⁺/₋ 0.6 |
| Formule C maltodextrines branchées | 10.6 % | 8.3 % | - 21.7 % | 42.5 % | 2.9 % | 30.0 % | 3.5 ⁺/₋ 0.5 |
| Formule D fibres solubles | 14.04 % | 10.86 % | - 22.6 % | 41.6 % | 3.3 % | 35.0% | 3.9 ⁺/₋ 0.7 |
| Formule D maltodextrines branchées | 13.7 % | 11.9 % | - 13.1 % | 42.6 % | 3.7 % | 29.5 % | 3.3 ⁺/₋ 0.2 |

L'augmentation du taux de maltodextrines branchées selon l'invention dans les snacks permet une diminution significative de la teneur en matières grasses après cuisson, ce que ne permettent pas, de manière surprenante et inattendue, les fibres solubles de l'art antérieur puisque la teneur en matières grasses reste voisine de 35% quelle que soit la teneur en fibres solubles. Les mesures de dureté à l'INSTRON ne montrent pas de différence sur la texture des chips. Les analyses démontrent par ailleurs que les fibres solubles de l'art antérieur sont plus sensibles à l'hydrolyse que les maltodextrines branchées conformes à l'invention dans les conditions de cuisson (friture à 195°C pendant 15 secondes).

Ces résultats démontrent que les maltodextrines branchées selon l'invention apportent un avantage technologique considérable dans la préparation de snacks puisqu'elles permettent de limiter la reprise en huile des snacks, tout en constituant un apport de fibres. L'efficacité desdites maltodextrines étant assurée pour une large plage d'incorporation, les formulateurs peuvent ainsi ajuster les teneurs à leur gré, suivant qu'ils souhaitent un produit « riche en fibres » ou « source de fibres ».

## Revendications

1. Procédé de fabrication de snacks cuits par friture allégés en matières grasses et enrichis en fibres, **caractérisé par le fait qu'**il comprend l'étape consistant à incorporer à la pâte servant à la fabrication desdits snacks de 1 à 30%, de préférence de 2 à 20% et plus préférentiellement encore de 2,5 à 15% en poids par rapport au produit fini de maltodextrines branchées présentant entre 15 et 35% de liaisons glucosidiques 1→6, une teneur en sucres réducteurs inférieure à 10%, un poids moléculaire Mw compris entre 4000 et 6000 g/mole et une masse moléculaire moyenne en nombre Mn comprise entre 2000 et 4000 g/mole.

2. Procédé selon la revendication 1, **caractérisé en ce que** lesdites maltodextrines branchées présentent une teneur en sucres réducteurs comprise entre 2 et 5% et une masse moléculaire moyenne Mn comprise entre 2000 et 3000 g/mole.

3. Procédé selon l'une ou l'autre des revendications 1 et 2, **caractérisé en ce que** lesdites maltodextrines branchées présentent un taux de fibres insolubles supérieur ou égal à 50% sur matière sèche.

4. Procédé selon l'une quelconque des revendications 1 à 3, **caractérisé en ce que** tout ou partie des maltodextrines branchées sont hydrogénées.

5. Procédé selon l'une quelconque des revendications 1 à 4, **caractérisé en ce que** la teneur en eau de la pâte est comprise entre 20 et 45%.

6. Procédé selon l'une quelconque des revendications 1 à 5, **caractérisé en ce qu'**on mélange lesdites maltodextrines branchées avec 1 à 2,5% en poids sec de maltodextrines standard présentant une teneur en sucres réducteurs supérieure à 5%.

7. Snacks cuits par friture allégés en matières grasses et enrichis en fibres, **caractérisés en ce qu'**ils comprennent de 1 à 30%, de préférence de 2 à 20% et encore plus préférentiellement de 2,5 à 15% en poids de maltodextrines branchées présentant entre 15 et 35% de liaisons glucosidiques 1→6, une teneur en sucres réducteurs inférieure à 10%, un poids moléculaire Mw compris entre 4000 et 6000 g/mole et une masse moléculaire moyenne en nombre Mn comprise entre 2000 et 4000 g/mole.

8. Snacks selon la revendication 7, **caractérisés en ce que** lesdites maltodextrines branchées présentent une teneur en sucres réducteurs comprise entre 2 et 5% et une masse moléculaire moyenne Mn comprise entre 2000 et 3000 g/mole.

9. Snacks selon l'une ou l'autre des revendications 7 et 8, **caractérisés en ce que** lesdites maltodextrines branchées présentent un taux de fibres insolubles supérieur à 50% sur sec.

10. Snacks selon l'une quelconque des revendications 7 à 9, **caractérisés en ce qu'**ils comprennent sur matière sèche :
- 6 à 14% de maltodextrines branchées présentant une teneur en sucres réducteurs comprise entre 2 et 5%, un poids moléculaire Mw compris entre 4000 et 6000 g/mole et une masse moléculaire moyenne Mn comprise entre 2000 et 3000 g/mole ;
- au moins 80% d'une source d'amidon
- au moins 0,5% d'émulsifiant

11. Snacks selon l'une quelconque des revendications 7 à 10, **caractérisés en ce qu'**ils comprennent en outre 1 à 2,5% en poids sec de maltodextrines standard présentant un teneur en sucres réducteurs supérieure à 5%.

## Claims

1. Process for manufacturing low-fat fibre-enriched snacks, which are cooked by frying, **characterized in that** it comprises the step consisting in incorporating into the paste used for the manufacture of said snacks from 1 to 30%, preferably from 2 to 20% and still more preferably from 2.5 to 15%, by weight relative to the finished product of branched maltodextrins having between 15 and 35% of 1->6 glucoside bonds, a reducing sugar content of less than 10%, a molecular weight Mw of between 4000 and 6000 g/mol and a number-average molecular weight Mn of between 2000 and 4000 g/mol.

2. Process according to claim 1, **characterized in that** said branched maltodextrins have a reducing sugar content of between 2 and 5% and an average molecular weight Mn of between 2000 and 3000 g/mol.

3. Process according to any one of claims 1 to 2, **characterized in that** said branched maltodextrins have an insoluble fibre level greater than or equal to 50% on a dry matter basis.

4. Process according to any one of claims 1 to 3, **characterized in that** all or some of the branched maltodextrins are hydrogenated.

5. Process according to any one of claims 1 to 4, **characterized in that** the water content of the paste is between 20 and 45%.

6. Process according to any one of claims 1 to 5, **characterized in that** said branched maltodextrins are mixed with 1 to 2.5% by dry weight of standard maltodextrins having a reducing sugar content greater than 5%.

7. Low-fat fibre-enriched snacks, which are cooked by frying, **characterized in that** they comprise from 1 to 30%, preferably from 2 to 20% and still more preferably from 2.5 to 15%, by weight of branched maltodextrins having between 15 and 35% of 1->6 glucoside bonds, a reducing sugar content of less than 10%, a molecular weight Mw of between 4000 and 6000 g/mol and a number-average molecular weight Mn of between 2000 and 4000 g/mol.

8. Snacks according to claim 7, **characterized in that** said branched maltodextrins have a reducing sugar content of between 2 and 5% and an average molecular weight Mn of between 2000 and 3000 g/mol.

9. Snacks according to any one of claims 7 to 8, **characterized in that** said branched maltodextrins have an insoluble fibre level greater than 50% on a dry basis.

10. Snacks according to any one of claims 7 to 9, **characterized in that** they comprise on a dry matter basis:
6 to 14% of branched maltodextrins having a reducing sugar content of between 2 and 5%, a molecular weight Mw of between 4000 and 6000 g/mol and an average molecular weight Mn of between 2000 and 3000 g/mol;
at least 80% of a source of starch;
at least 0.5% of emulsifier.

11. Snacks according to any one of claims 7 to 10, **characterized in that** they further comprise 1 to 2.5% by dry weight of standard maltodextrins having a reducing sugar content of greater than 5%.

## Patentansprüche

1. Verfahren zur Herstellung von durch Braten gegarten Snacks, in denen Fettsubstanzen vermindert und Fasern angereichert sind, **dadurch gekennzeichnet, dass** es einen Schritt der Zugabe von 1 bis 30 Gew.-%, vorzugsweise 2 bis 20 Gew.-% und ganz besonders bevorzugt 2,5 bis 15 Gew.-%, bezogen auf das Endprodukt, verzweigte Maltodextrine mit 15 bis 35% 1-6-glukosidischen Bindungen, einem Gehalt an reduzierenden Zuckern unterhalb von 10%, einem Molekulargewicht Mw zwischen 4000 und 6000 g/mol und einer zahlengemittelten Molekülmasse Mn zwischen 2000 und 4000 g/mol zu der Paste, die zur Herstellung der Snacks dient, umfasst.

2. Verfahren nach Anspruch 1, **dadurch gekennzeichnet, dass** die verzweigten Maltodextrine einen Gehalt an reduzierenden Zuckern zwischen 2 und 5% und eine mittlere Molekülmasse Mn zwischen 2000 und 3000 g/mol aufweisen.

3. Verfahren nach einem der Ansprüche 1 und 2, **dadurch gekennzeichnet, dass** die verzweigten Maltodextrine einen Anteil an unlöslichen Fasern von mehr als oder gleich 50%, bezogen auf die Trockensubstanz, aufweisen.

4. Verfahren nach einem der Ansprüche 1 bis 3, **dadurch gekennzeichnet, dass** die gesamten oder ein Teil der verzweigten Maltodextrine hydriert sind/ist.

5. Verfahren nach einem der Ansprüche 1 bis 4, **dadurch gekennzeichnet, dass** der Wassergehalt der Paste zwischen 20 und 45% beträgt.

6. Verfahren nach einem der Ansprüche 1 bis 5, **dadurch gekennzeichnet, dass** die verzweigten Maltodextrine mit 1 bis 2,5 Gew.-%, bezogen auf das Trockengewicht, Standard-Maltodextrinen mit einem Gehalt an reduzierenden Zuckern oberhalb von 5% gemischt werden.

7. Durch Braten gegarte Snacks, in denen Fettsubstanzen vermindert und Fasern angereichert sind, **dadurch gekennzeichnet, dass** sie 1 bis 30 Gew.-%, vorzugsweise 2 bis 20 Gew.-% und ganz besonders bevorzugt 2,5 bis 15 Gew.-% verzweigte Maltodextrine mit 15 bis 35% 1-6-glukosidischen Bindungen, einem Gehalt an reduzierenden Zuckern unterhalb von 10%, einem Molekulargewicht Mw zwischen 4000 und 6000 g/mol und einer zahlengemittelten Molekülmasse Mn zwischen 2000 und 4000 g/mol umfassen.

8. Snacks nach Anspruch 7, **dadurch gekennzeichnet, dass** die verzweigten Maltodextrine einen Gehalt an reduzierenden Zuckern zwischen 2 und 5% und eine mittlere Molekülmasse Mn zwischen 2000 und 3000 g/mol aufweisen.

9. Snacks nach einem der Ansprüche 7 und 8, **dadurch gekennzeichnet, dass** die verzweigten Maltodextrine einen Anteil an unlöslichen Fasern oberhalb von 50%, bezogen auf das Trockengewicht, aufweisen.

10. Snacks nach einem der Ansprüche 7 bis 9, **dadurch gekennzeichnet, dass** sie, bezogen auf das Trockengewicht, Folgendes enthalten:
- 6 bis 14% verzweigte Maltodextrine mit einem Gehalt an reduzierenden Zuckern zwischen 2 und 5%, einem Molekulargewicht Mw zwischen 4000 und 6000 g/mol und einer mittleren Molekülmasse Mn zwischen 2000 und 3000 g/mol;
- mindestens 80% einer Stärkequelle;
- mindestens 0,5% Emulgator.

11. Snacks nach einem der Ansprüche 7 bis 10, **dadurch gekennzeichnet, dass** sie ferner 1 bis 2,5 Gew.-%, bezogen auf das Trockengewicht, Standard-Maltodextrine mit einem Gehalt an reduzierenden Zuckern oberhalb von 5% enthalten.
